Europäisches Patentamt

European Patent Office

Office européen des brevets

(11) Numéro de publication: **0 094 318**
**B1**

## FASCICULE DE BREVET EUROPÉEN

(45) Date de publication du fascicule du brevet:
23.07.86

(51) Int. Cl.⁴: **B 60 N 1/12**

(21) Numéro de dépôt: **83400943.3**

(22) Date de dépôt: **10.05.83**

(54) Coussin additionnel pour passager enfant d'un véhicule.

(30) Priorité: **11.05.82 FR 8208139**

(43) Date de publication de la demande:
**16.11.83 Bulletin 83/46**

(45) Mention de la délivrance du brevet:
**23.07.86 Bulletin 86/30**

(84) Etats contractants désignés:
**DE GB IT NL SE**

(56) Documents cité:
**EP-A-0 049 680**
**DE-A-2 932 150**
**FR-A-2 347 010**
**FR-A-2 413 896**
**FR-A-2 447 831**
**US-A-4 186 962**

**Le dossier contient des informations techniques
présentées postérieurement au dépôt de la
demande et ne figurant pas dans le présent
fascicule.**

(73) Titulaire: **REGIE NATIONALE DES USINES
RENAULT, Boîte postale 103 8-10 avenue Emile
Zola, F-92109 Boulogne- Billancourt (FR)**

(72) Inventeur: **Claude, Tarriere, 27, rue du Fond
Louvet, F-92500 Rueil Malmaison (FR)**
Inventeur: **Giraud, Alain, 13, le Clos de Verrières,
F-91370 Verrieres le Buisson (FR)**
Inventeur: **Cassan, Françoise, 55, avenue Henri
Barbusse, F-92140 Clamart (FR)**

(74) Mandataire: **Ernst- Schonberg, Michel, R.N.U.R. S.
0804 B.P. 103 8 & 10, avenue Emile- Zola, F-92109
Boulogne Billancourt (FR)**

LIBER, STOCKHOLM 1986

## Description

L'invention concerne un coussin additionnel pour passager enfant d'un véhicule, destiné à être disposé sur l'assise d'un siège et comportant une surface d'assise et des encoches latérales conformées en deux fentes de passage d'une sangle de bassin de profils complémentaires à cette sangle, ménagées de part et d'autre de ladite surface d'assise et débouchant à l'extérieur du coussin.

On connaît par la publication FR-A 2 447 831 un tel coussin qui assure la retention d'un passager enfant à l'aide d'une ceinture de sécurité conventionnelle du type à sangle de bassin et baudrier.

Le problème non résolu par ce type de coussin réside dans le fait que la ceinture de sécurité est susceptible de prendre appui sur le thorax et l'abdomen de l'enfant consécutivement à un choc au cours duquel la sangle de bassin se tord sous l'effet de sa mise sous tension et tend à remonter sur le bassin. Ceci n' est pas sans inconvénients car on sait que le bassin d'un enfant ne possède pas de crêtes iliaques dont la formation ultérieure constituerait un appui correct de la sangle de bassin.

L'invention se propose donc de perfectionner le coussin prédéfini dans le but d' éviter les lésions consécutives à la remontée de la sangle debassin sur l'abdomen.

L'invention se propose également de perfectionner le coussin prédéfini en l'associant à un élément correcteur de hauteur qui constitue une coquille intérieure dans le but d'adapter ce dernier à des passagers de taille et de morphologie plus petites tout en leur procurant une bonne retenue latérale.

A cet effet, l'invention a pour objet un coussin additionnel du type ci-dessus, caractérisé par le fait que les fentes débouchent horizontalement respectivement de part et d'autre de l'assise au contact de la surface d'assise où elles présentent une partie horizontale de façon à reposer à plat sur les cuisses du passager et débouchent en outre verticalement sur le dessus de surplombs susceptibles de venir en affleurement avec des surplombs additionnels portés latéralement par un élément correcteur reposant par sa base sur la face supérieure de l'assise.

D'autres caractéristiques et avantages de l'invention apparaitront au cours de la description qui va suivre en référence aux dessins annexés.

- la figure 1 est une vue en perspective d'une première forme de réalisation du coussin suivant l'invention, monté sur un siège de véhicule.
- la figure 2 est une vue en coupe longitudinale suivant la ligne II-II de la figure 1.
- la figure 3 est une vue en perspective d'une armature métallique destinée à être utilisée dans la forme de construction du coussin représenté à la figure 1.
- la figure 4 est une vue en perspective du coussin avec sa rehausse.
- les figures 5 et 6 sont des vues en coupe partielle du coussin avec sa housse d'habillage.
- les figures 7 et 8 sont des vues en perspective de deux autres formes de réalisation du coussin monté sur un siège de véhicule.

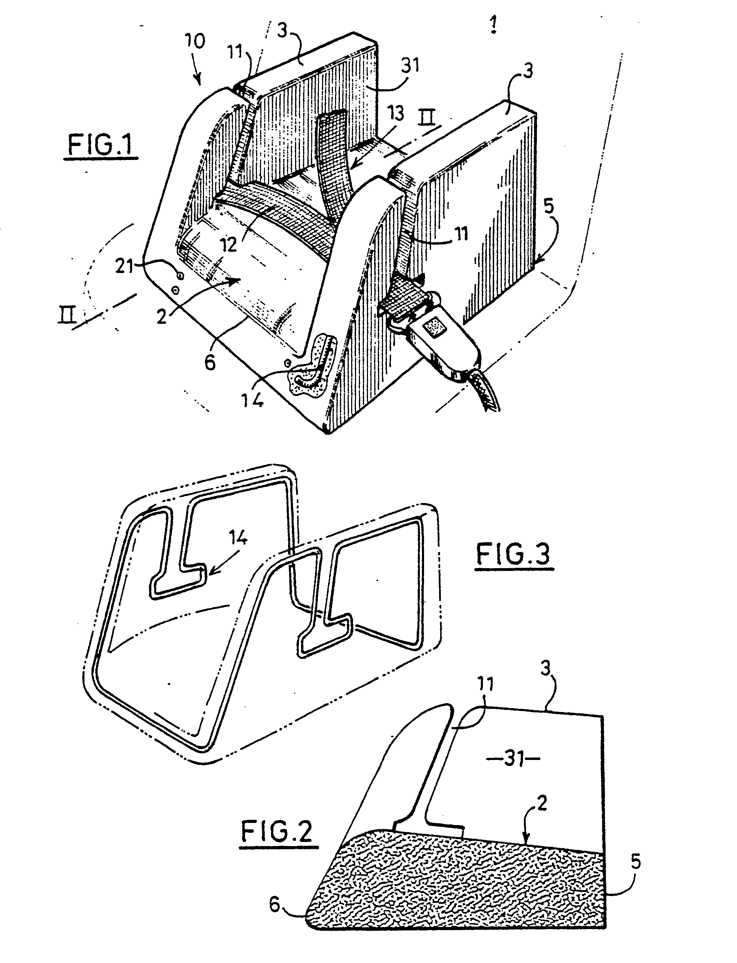

Dans la forme préférentielle de réalisation représentée à la figure 1, la surface supérieure d'assise 2 du coussin 10 est profilée de manière à conférer à l'enfant une surface d'assise 2 confortable. Deux surplombs latéraux 3 s' étendent vers le haut et sont prévus sur chacun des deux côtés opposés latéraux du coussin 10. Les surplombs 3 s'étendant dubord postérieur 5 du coussin 10 jusqu'à proximité du bord antérieur 6 du coussin.

Il y a lieu de noter que le coussin 10 ne possède aucun dossier et que le passager est directement adossé au dossier du siège 1 du véhicule.

Des encoches latérales 11 situées de part et d'autre de la surface 2 sont formées dans les surplombs 3, et débouchent sur le dessus de ceux-ci. Les encoches 11 reçoivent la sangle de bassin 12 d'une ceinture de sécurité13 et débouchent en outre verticalement sur le dessus des surplombs 3.

Les encoches latérales 11 débouchent horizontalement respectivement au contact de la surface d'assise 2 et sont conformées en deux fentes de passage de la sangle, de profil complémentaire à celle-ci dans le but de permettre à cette sangle de reposer sensiblement à plat sur les cuisses de l'enfant. A cet effet, les fentes de passage de la sangle aboutissent en s'élargissant sensiblement dans le plan de l'assise à proximité des surplombs 3 qui constituent des appui-bras de l'enfant tandis que leurs flancs internes 31 limitent les déplacement transversaux du bassin de celui-ci.

Ainsi que cela est montré à la figure 1 ou 2, les guides de la sangle 12 sont symétriques par rapport au plan médian longitudinal du coussin. Ces guides ainsi que les surplombs 3 sont rendus rigides au moyen d'une boucle 14 d'un fil métallique qui est noyé dans la matière plastique constitutive du coussin. La portion de la boucle 14 qui est noyée dans les surplombs 3 possède une forme telle, que celle-ci est fermement reliée à la structure de l'assise 2.

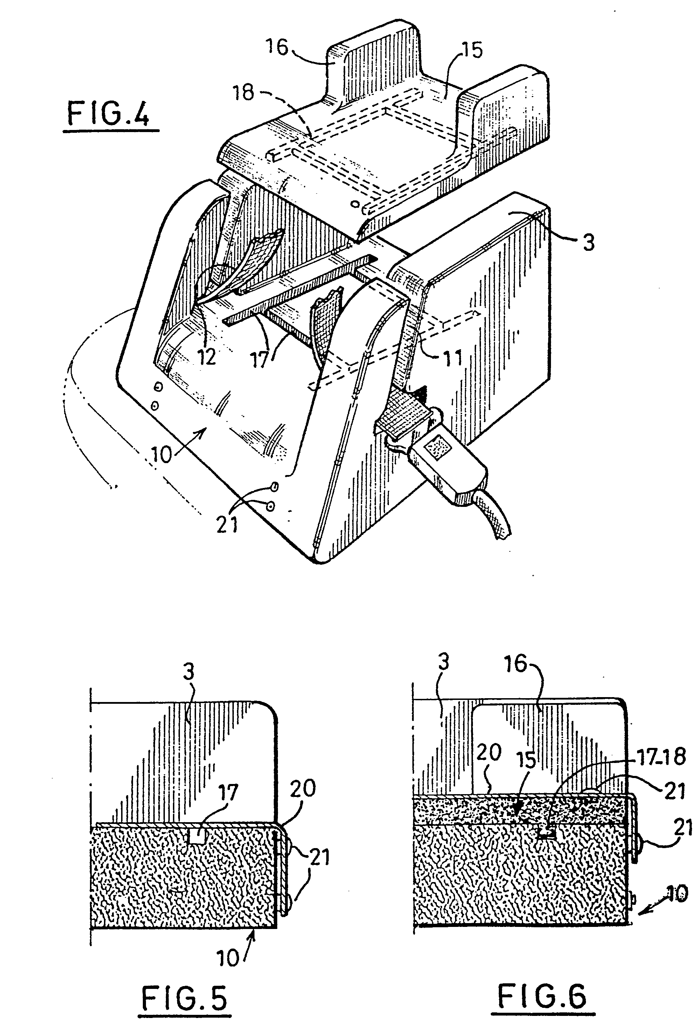

Le coussin peut également recevoir un élément correcteur de niveau représenté à la figure 4. L'élément correcteur de niveau 15 reposepar sa base sur la face supérieure de l'assise 2, et porte des surplombs latéraux 16 dont le sommet affleure celui des surplombs 3 du coussin 10.

Selon l'exemple de réalisation illustré, l'élément correcteur 15 est encastré entre les surplombs 3 dans le but de réduire la largeur totale de la surface d'assise du coussin équipé de l'élément correcteur. La combinaison du coussin 10 et de l'élément correcteur 15 peut ainsi être utilisé par des enfants beaucoup plus jeunes (par exemple de 6 à 24 mois), tandis que le coussin 10 assure le maintien correct d'un enfant plus agé.

Dans le but d'éviter les déplacements longitudinaux de l'élément correcteur 15 par rapport au coussin 10, la face supérieure de la surface d'assise du coussin porte des zones d'assemblage 17 ajustables aux zones complémentaires 18 prévues à la base inférieure de l'élément correcteur 15, de la hauteur de la surface d'assise.

Dans le but de conférer au coussin 10, et à la combinaison constituée par ce coussin et par l'élément correcteur, un aspect de sellerie conventionnel, ceux-ci peuvent être revêtus d'une housse 20 portant des moyens d'attache 21 constitués, à titre d'exemple, par des boutons de pression plus visiblement représentés aux figures 5 et 6, dont l'agencement permet le revêtement du coussin 10 (figure 5) ou de la combinaison précitée (figure 6).

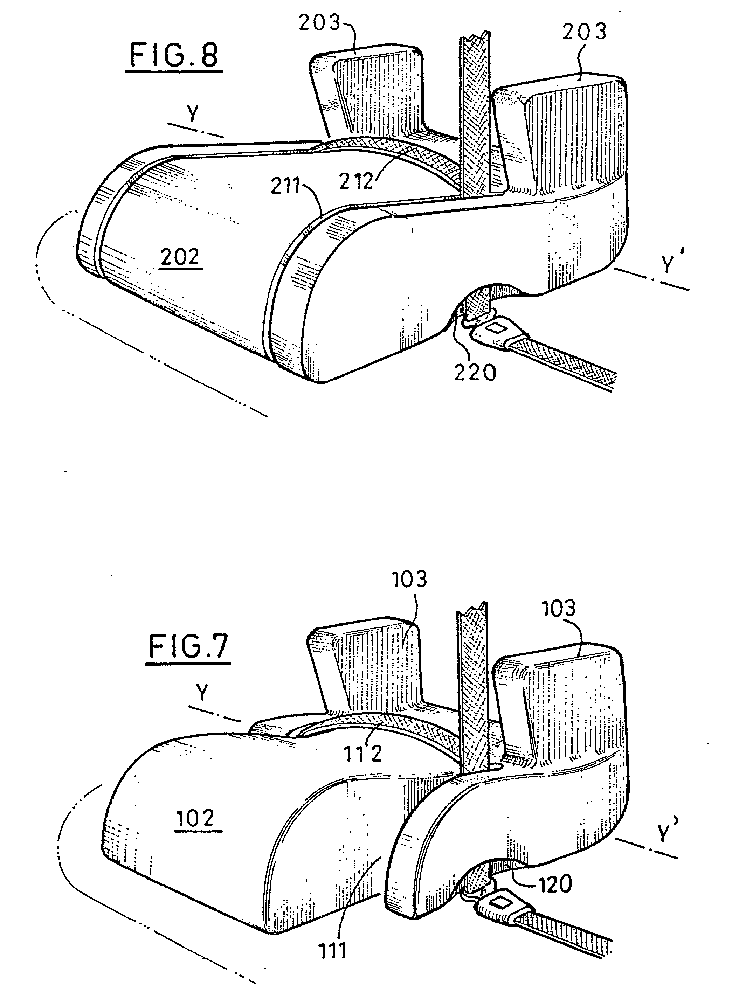

Le concept de base de l'invention peut-être mis en oeuvre sous la forme de variantes de réalisation représentées aux figures 7, 8. Dans ces variantes, les éléments correspondants de ceux de la figure 1 sont désignés par les mêmes numéros de référence augmentés respectivement du nombre 100 (figure 7) ou 200 (figure 8).

Dans la construction du coussin représenté à la figure 7, la surface supérieure de l'assise 102 se prolonge vers l'avant par une rehausse des cuisses tandis que les fentes de passage 111 de la sangle 112 s'étendent longitudinalement dans le sens d'orientation des surplombs 103, et devant lesdits surplombs.

Dans la construction du coussin représenté à la figure 8, la surface supérieure de l'assise 202 porte les fentes de passage 211 qui s'étendent longitudinalement.

Selon les variantes de réalisation représentées aux figures 7, 8, les fentes de passage de la sangle sont sensiblement verticales et la surface d'assise 102 ou 202 du coussin est montée à flexion autour d'un axe transversal YY' situé sensiblement au niveau de la base antérieure des surplombs 103, 203. Un tel mode de réalisation améliore le confort du coussin en réduisant la pression de contact de celui-ci au niveau des cuisses de l'enfant.

Dans le but de mieux dissimuler le bouton de déverrouillage de la ceinture, l'un au moins des flancs latéraux du coussin comporte à sa base un évidement 120, 220.

L'invention propose donc un coussin pour enfant, muni de moyens de retenue de la ceinture de sécurité peu coûteux et efficace. Ce coussin peut-être associé à une ceinture de sécurité munie d'une boucle de déverouillage où d'un pène, et il evite de façon efficace le contact de la sangle avec l'abdomen de l'enfant lorsque la sangle de poitrine est soumise à un effort de tension, que l'on rencontre lors d'une décélération brutale du véhicule ou au cours d'une collision.

**Revendications**

1. Coussin additionnel pour passager enfant d'un véhicule, destiné à être disposé sur l'assise d'un siège et comportant une surface d'assise (2) et des encoches latérales (11) conformées en deux fentes de passage d'une sangle de bassin (12), de profils complémentaires à cette sangle, ménagées de part et d'autre de ladite surface d'assise et débouchant à l'extérieur du coussin, caractérisé par le fait que les fentes (11) débouchent horizontalement respectivement de part et d'autre de l'assise au contact de la surface d'assise (2) où elles présentent une partie horizontale de façon à reposer à plat sur les cuisses du passager et débouchent en outre verticalement sur le dessus de surplombs (3) susceptibles de venir en affleurement avec des surplombs additionnels (16) portés latéralement par un élément correcteur (15) reposant par sa base sur la face supérieure de l'assise (2).

2. Coussin selon la revendication 1, caractérisé par le fait que la surface d'assise (102, 202) du coussin est montée à flexion autour d'un axe transversal (YY') situé sensiblement au niveau de la base antérieure des surplombs (103, 203).

3. Coussin selon la revendication 1 ou 2, caractérisé par le fait que la face supérieure de la surface d'assise (2) porte des zones d'assemblage (17) ajustables aux zones complémentaires (18) prévues à la base inférieure de l'élément correcteur (15) de la hauteur de la surface d'assise.

**Patentansprüche**

1. Zusätzliches Kissen für Kinder in Fahrzeugen, das zur Anordnung auf der Sitzfläche eines Sitzes dient und das eine Sitzfläche (2) sowie zwei seitliche Schlitze (11) aufweist, mit zwei Durchlaßspalten für einen Beckengurt (12), deren Formen an den Gurt angepaßt sind und die beidseits der Sitzfläche vorgesehen sind und im freien Raum neben dem Kissen münden, dadurch gekennzeichnet, daß die Spalten (11) waagrecht und beidseits der Sitzfläche in Höhe der Oberfläche der Sitzfläche (2) münden, wo sie einen waagrechten Abschnitt bilden, der neben den Oberschenkeln des Kindes liegt und außerdem in senkrechter Richtung auf der Oberfläche von Vorsprüngen (3) münden, die mit zusätzlichen Vorsprüngen (16) bündig abschließen können, welche seitlich von einem Korrekturteil (15) getragen sind, dessen Grundteil auf der Oberfläche der Sitzfläche (2) ruht.

2. Kissen nach Anspruch 1, dadurch gekennzeichnet, daß die Sitzfläche (102, 202) des Kissens um eine Querachse (y, y') drehbar angeordnet ist, die im wesentlichen auf Höhe des vorderen Grundteils der Vorsprünge (103, 203) vorgesehen ist.

3. Kissen nach Anspruch 1 oder 2, dadurch gekennzeichnet, daß die Oberfläche der Sitzfläche (2) Einbaubereiche (17) aufweist, die auf Einbaubereiche (18) einstellbar sind, welche am Unterteil des Korrektursteils (15) für die Höhe der Sitzfläche vorgesehen sind.

## Claims

1. An additional squab for a child passenger in a vehicle, which is intended to be disposed on the seat portion of a seat and which comprises a seat surface (2) and lateral openings (11) which are formed as two slots for a lap belt (12) to pass therethrough, of profiles which are complementary to said belt, being disposed on respective sides of said seat surface and opening to the exterior of the squab, characterised in that the slots (11) open horizontally on respective sides of the seat portion in contact with the seat surface (2) where they have a horizontal portion in such a way as to rest flat on the thighs of the passenger and also open vertically at the top of upstanding portions (3) which are capable of coming into flush alignment with additional upstanding portions (16) which are carried laterally by a oorrector element (15) which rests by way of its base on the upward face of the seat portion (2).

2. A squab according to claim 1 characterised in that the seating surface (102, 202) of the squab is mounted bendably about a transverse axis (Y, Y') disposed substantially at the level of the front base of the upstanding portions (103, 203).

3. A squab according to claim 1 or claim 2 characterised in that the upward face of the seating surface (2) bears assembly zones (17) which can be engaged withthe complementary zones (18) provided at the lower base of the element (15) for correcting the height of the seating surface.

FIG.1

FIG.2

FIG.3

FIG.4

FIG.5

FIG.6

FIG.8

203

203

Y

211

212

202

Y'

220

FIG.7

103

103

Y

112

102

Y'

120

111